# EUROPÄISCHE PATENTSCHRIFT

(11) **EP 1 920 908 B1**
(45) Veröffentlichungstag und Bekanntmachung des Hinweises auf die Patenterteilung: **08.04.2015**
(21) Anmeldenummer: 07021377.2
(22) Anmeldetag: 02.11.2007
(51) Int. Cl.: B29C 70/38, B29C 70/54, B29C 70/56

(54) **Verfahren zur Ablage großer Textilfaserbahnen**
Method for stacking large textile fibre sheets
Procédé destiné déposer de grandes bandes de textile

(30) Priorität: 08.11.2006 DE 102006052592
(43) Veröffentlichungstag der Anmeldung: 14.05.2008
(73) Patentinhaber: Airbus Defence and Space GmbH, 85521 Ottobrunn (DE)
(72) Erfinder: Müller-Hummel, Peter, 89359 Kötz (DE); Ter, Patrick, 86159 Augsburg (DE); Scholler, Jochen, 86845 Großaitingen (DE); Stadler, Franz, 85113 Böhmfeld (DE); Berchthold, Gerd, 82362 Weilheim (DE)
(74) Vertreter: Hummel, Adam

(56) Entgegenhaltungen:
- EP-A- 0 846 551
- EP-A- 1 334 819
- US-A- 6 045 651
- US-A1- 2006 180 270

## Beschreibung

Die Erfindung betrifft ein Verfahren zur Ablage großer Textilfaserbahnen, insbesondere aus C-Fasern, für die Herstellung faserverstärkter Kunststoffbauteile (z.B. CFK, GFK etc). Unter einer derartig großen Textilfaserbahn werden solche mit einer Breite von mindestens 500 mm verstanden.

Automatische Ablageverfahren sind für einzelne Endlos-Faserstränge bereits bekannt, siehe DE 42 12 135 C2.

Auch für vorimprägnierte CFK-Streifen, so genannte Tapes, sind maschinelle Ablageverfahren bekannt **(**US 4,997,508**).** Da diese Tapes aufgrund ihrer Vorimprägnierung bei der Ablage sofort fixiert werden, ist eine automatische Verarbeitung ohne Probleme möglich. Die Breite dieser Tapes beträgt in der Regel nur wenige Zentimeter.

Große Textilfaserbahnen aus C-Fasern (z.B. in Form von Gelegen mit einer Breite von 1,27m entsprechend 50 Zoll und einer Länge von bis zu 6 m), wie sie im Flugzeugbau eingesetzt werden, können bisher nur manuell gelegt werden. Die manuelle Ablage derart großer Gelegebahnen ist jedoch nur mit eingeschränkter Präzision möglich. Es ergeben sich Lücken zwischen benachbarten Bahnen sowie Welligkeiten innerhalb einer Bahn.

Die DE 697 17 053 T2 beschreibt ein Bandlegekopf zur Herstellung von Verbundplatten durch Ablage von Textilfaserbändern. Das Ende des abzulegenden, mit Harz vorimprägnierten Textilfaserbands wird auf einer Bauteilform platziert. Durch Verschieben des Bandlegekopfs wird die Textilfaserbahn von der Rolle abgerollt und auf der Bauteilform abgelegt. Mittels einer Walze erfolgt gleichzeitig mit der Ablage ein Drapieren der Textilfaserbahn.

Die EP 1 334 819 A1 beschreibt ein Verfahren zur Ablage vorimprägnierter Faserbänder, wobei die Ausrichtung der abgelegten Bänder mittels Kamera fortlaufend überwacht wird. Des Weiteren sind Mittel vorhanden, mit der der Ablagevorgang im Hinblick auf eine vorgegebene Ablagerate fortlaufend überwacht wird.

Die EP 0 680 818 A2 und EP 0 846 551 beschreiben eine Vorrichtung zur Ablage vorimprägnierter, sehr dünner Faserbänder. Zum Zwecke der Ablage des Faserbands sowie zu dessen Kompaktierung sind in der EP 0 680 818 beweglich gelagerte Rollen vorhanden.

In der US 2006/0180270 A1 ist ein Verfahren zur Ablage von sowohl trockener als auch vorimprägnierter Textilfaserbahnen offenbart. Dabei kann die Ausrichtung der Textilfaserbahnen relativ zur Bauteilform fortlaufend mittels optischer Mittel überwacht werden.

Es ist Aufgabe der Erfindung, ein Verfahren für die Ablage großer Textilfaserbahnen zu schaffen, mit dem eine gute Qualität der hergestellten faserverstärkten Kunststoffbauteilen erzielt wird, insbesondere sollen Faserlücken, Faserwelligkeiten und Faserverzug auch bei komplizierten Oberflächenformen vermieden werden.

Diese Aufgabe wird mit dem Verfahren nach Anspruch 1 gelöst. Vorteilhafte Ausführungen sind Gegenstand von Unteransprüchen.

Mit der Erfindung wird ein vollautomatisches Verfahren zur Ablage großer Textilfaserbahnen, insbesondere aus C-Fasern, Glasfasern oder Aramid-Fasern, realisiert. Gegenüber manuellen Verfahren kann eine erhöhte Bauteilqualität erzielt werden, da insbesondere ein Faserverzug weitgehend vermieden und eine gute Anpassung an die Bauteilform erzielt werden kann.

Die abzulegenden Textilfaserbahnen liegen in Form trockener Materialien vor, d.h. sie sind nicht mit Harz vorimprägniert. Ihre Klebeeigenschaft erhalten sie z.B. durch ein auf der Oberfläche aufgebrachtes, z.B. thermoplastisches Bindervlies, das durch Wärmeeinwirkung schmilzt.

Trockene Textilfaserbahnen haben den Vorteil, dass die einzelnen Fasern anders als bei vorimprägnierten Materialien festgelegt sind, sondern vielmehr beweglich innerhalb der Faserstruktur bleiben. Durch den Drapiervorgang können die Textilfaserbahnen somit sehr gut an eine gekrümmte Bauteiloberfläche angepasst werden. Der Drapiervorgang beinhaltet dabei nicht nur eine Kompaktierung des Fasermaterials. Vielmehr erfolgt innerhalb der Faserstruktur eine Änderung der Faserwinkel. Der Verlauf der Fasern untereinander ändert sich. Durch diese Flexibilität des trockenen Fasermaterials wird eine Ablage großer Textilfaserbahnen mit einer Breite von mindestens 500mm ermöglicht.

Um die Anpassung an gekrümmte Oberflächen zu erreichen, werden erfindungsgemäß Drapiermittel eingesetzt, die sich durch große Flexibilität und Beweglichkeit auszeichnen. Es handelt sich dabei um Gleitbleche oder beweglich gelagerte Rollen.

Die abzulegenden Textilfaserbahnen weisen in bevorzugten Ausführungen eine Fläche von mindestens 3 m² auf.

Eine Textilfaserbahn kann insbesondere als Gelege (mehrere Rovings aufeinander gelegt und fixiert, z.B. vernäht) oder als Gewebe (einzelne Fasern miteinander verwebt) vorliegen. Die Textilfaserbahnen weisen in der Regel parallele Kanten auf, die Bahnen können jedoch auch in beliebiger Weise konturiert sein (z.B. zumindest abschnittsweise gekrümmte Kanten aufweisend).

Die Erfindung wird im Folgenden anhand konkreter Ausführungsbeispiele unter Bezug auf Zeichnungen näher erläutert. Sie zeigen einzelne Verfahrensschritte wie folgt:
- Fig. 1:: Greifen einer Textilfaserbahn,
- Fig. 2:: Platzieren der Textilfaserbahn,
- Fig. 3:: Ablegen der Textilfaserbahn,
- Fig. 4:: Ablegen der Textilfaserbahn mit optischer Bahnkantensteuerung,
- Fig. 5:: Messung des Durchmessers der Textilfaserrolle zur Sicherung einer gleichmäßigen Ablage,
- Fig. 6:: fortlaufende Zugüberwachung der Textilfaserbahn mittels Tänzerrolle,
- Fig. 7:: Drapieren der Textilfaserbahn - Variante 1
- Fig. 8:: Drapieren der Textilfaserbahn - Variante 2,
- Fig. 9:: Fixieren der Textilfaserbahn beim Greifen der Textilfaserbahn,
- Fig.10:: Schneiden einer Textilfaserbahn.

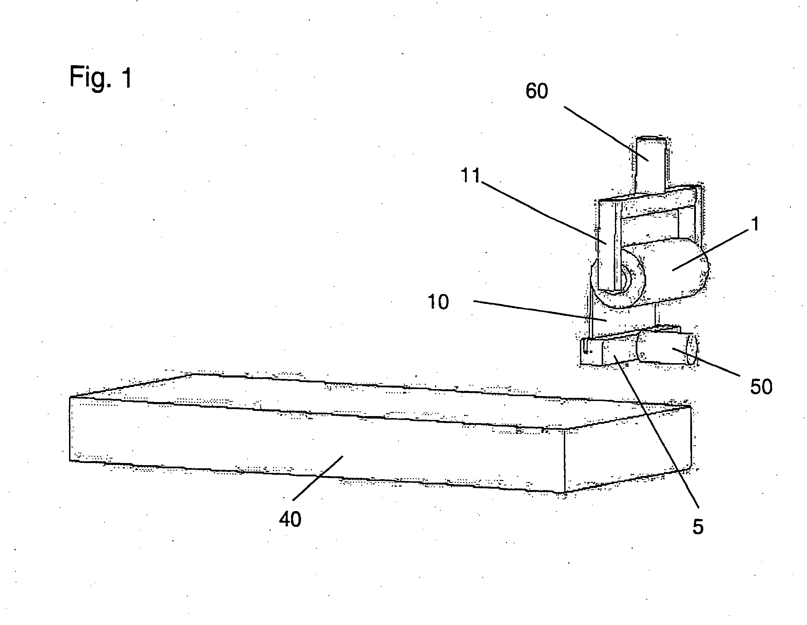

Die Fig. 1 bis 3 zeigen die drei prinzipiellen Schritte des erfindungsgemäßen Verfahrens, hier am Beispiel einer im Wesentlichen ebenen Bauteiloberfläche. Das erfindungsgemäße Verfahren ist jedoch auch und insbesondere für die Ablage auf beliebig gekrümmten Oberflächen geeignet.

In Fig. 1 ist zunächst das Greifen der abzulegenden trockenen Textilfaserbahn 10 mittels Tuchgreifer 5 dargestellt. Die Textilfaserbahn 10 liegt aufgerollt in Rollenform (Rolle 1) auf einer angetriebenen Rollachse vor. Die Rollachse ist an einem Tuchabroller 11 angeordnet, die von einem Roboter 60 getragen wird.

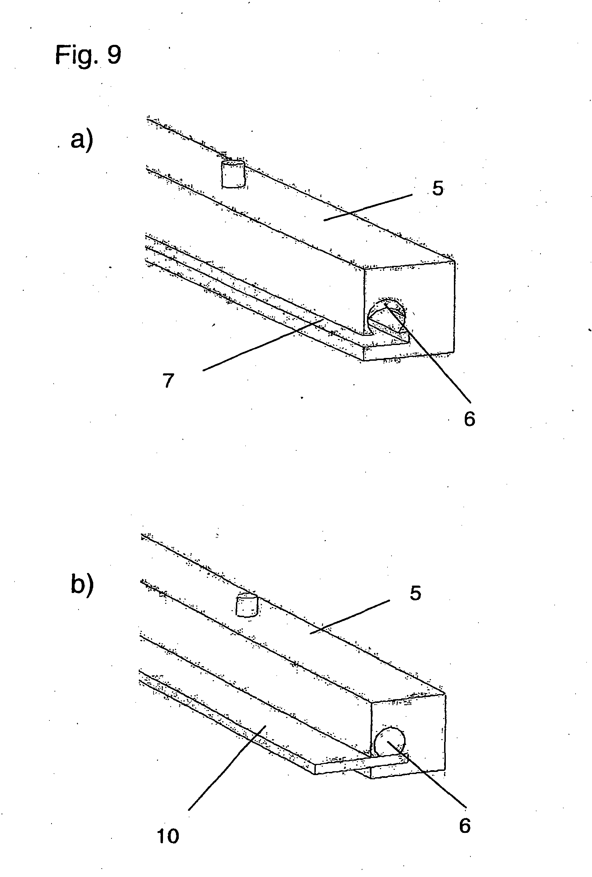

Der von einem zweiten Roboter 50 getragene Tuchgreifer 5 wird in Position bewegt. Der Tuchabroller 11 positioniert die Kante der Textilfaserbahn 10 über einem Aufnahmeschlitz 7 (Fig. 9) des Tuchgreifers 5, anschließend wird die Textilfaserbahn 10 eine definierte Länge von der Rolle 1 abgerollt. Der Tuchgreifer 5 wird nun hochgefahren, so dass die Kante der Textilfaserbahn 10 in den Aufnahmeschlitz 7 des Tuchgreifers 5 gelangt. Anschließend wird die Textilfaserbahn 10 durch das Aufblasen eines Schlauches 6 (Fig. 9) im Tuchgreifer fixiert.

Der Tuchgreifer 5 ist in Fig. 9 in zwei verschiedenen Betriebsphasen näher dargestellt. Man erkennt den Aufnahmeschlitz 7 für die Textilfaserbahn 10. Benachbart hierzu ist ein mit einer Vakuumpumpe verbundener elastischer Schlauch 6 angeordnet, der in der Abb. a) entlüftet ist und in der Abb. b) aufgeblasen ist. Durch Aufblasen des Schlauchs 6 wird der Schlauch expandiert, so dass die im Aufnahmeschlitz 7 befindliche Textilfaserbahn 10 fixiert wird.

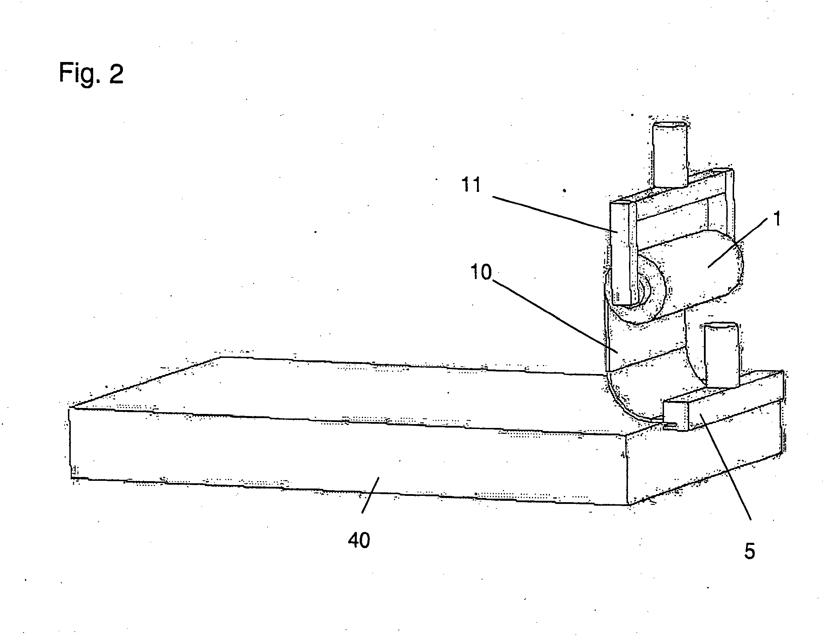

Fig. 2 beschreibt das Platzieren der Textilfaserbahn 10 auf einer Bauteilform, wobei die Form, die sich auf dem Ablagetisch 40 befindet, aus Gründen der Übersichtlichkeit nicht dargestellt ist. Die Bauteilform kann eine ebene Oberfläche aufweisen. Jedoch sind auch beliebig gekrümmte Formen (z.B. zylindrisch, sphärisch, etc) möglich. Die Textilfaserbahn 10 wird auf eine bestimmte Länge von der Rolle 1 abgerollt. Der Tuchgreifer 5 platziert die Textilfaserbahn 10 in eine definierte Position und richtet die Kanten der Textilfaserbahn relativ zur Bauteilform entsprechend aus. Bevor der Tuchgreifer 5 die Textilfaserbahn wieder loslässt, wird ein kurzes Teilstück davon abgelegt. Nach dem Loslassen der Textilfaserbahn fährt der Tuchgreifer 5 in die Grundposition zurück.

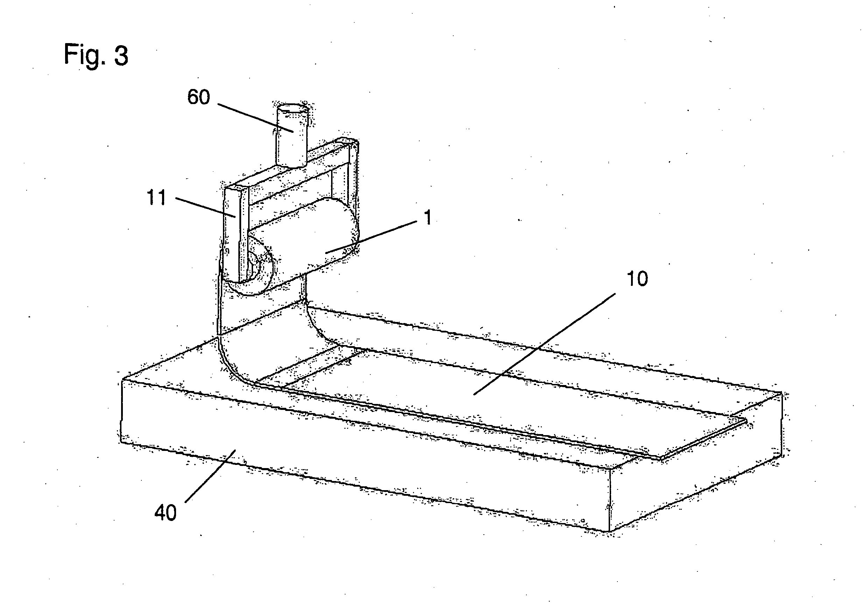

In einem weiteren Verfahrensschritt, der in Fig. 3 dargestellt ist, erfolgt das eigentliche Ablegen der Textilfaserbahn 10 mittels einer Linearbewegung entweder des Tuchabrollers 11 oder des Ablagetisches 40. Die Textilfaserbahn 10 wird entlang eines vorgegebenen Wegs abgelegt.

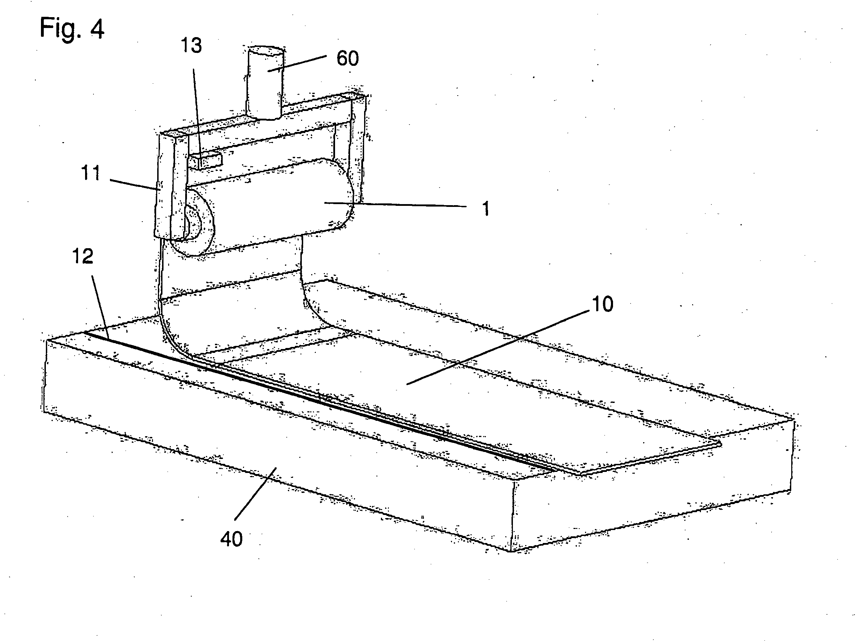

Der Weg, entlang welcher die Textilfaserbahn 10 abgelegt werden soll, kann z.B. mittels einer optischen Bahnkantensteuerung vorgegeben werden. Dies zeigt Fig. 4. Die entsprechend dem Bauteilaufbau vorgegebene Sollposition wird durch eine oder mehrere Laserlinien 12, die auf die Form projiziert wird, markiert. Am Tuchabroller 11 befindet sich ein Sensor 13, z.B. ein so genannter PSD-Chip, welcher mit der Steuerung des Roboters 60 gekoppelt ist. Dieser Chip 13 vergleicht die Position der projizierten Laserlinie mit einer Soll-Position. Die Robotersteuerung korrigiert entsprechend die Position des Tuchabrollers 11, bis die beiden Positionen übereinstimmen.

Die Fig. 1 bis 4 zeigen die Ablage einer einzelnen Textilfaserbahn in 0°-Richtung. Nach Schneiden der Textilfaserbahn können weitere Textilfaserbahnen nach der selben Vorgehensweise aufeinander abgelegt werden, wobei auch andere Ablagerichtungen möglich sind, insbesondere in Richtung 90° und ±45°.

Beim Ablegen muss sichergestellt werden, dass die Textilfaserbahn 10 gleichmäßig, also mit konstanter Ablegerate (abgelegte Textilfaserfläche pro Zeiteinheit) abgelegt werden kann. Sowohl Spannungen im Fasermaterial als auch Wellenbildungen in der abgelegten Textilfaserbahn sollen vermieden werden. Dazu muss die Linearbewegung des Tisches 40 oder des Tuchabrollers 11 und die Drehbewegung der Rolle 1 aufeinander abgestimmt werden. Eine fortlaufende Regelung ist insbesondere deshalb notwendig, da sich durch Abrollen der Textilfaserbahn von der Rolle deren Durchmesser fortlaufend ändert.

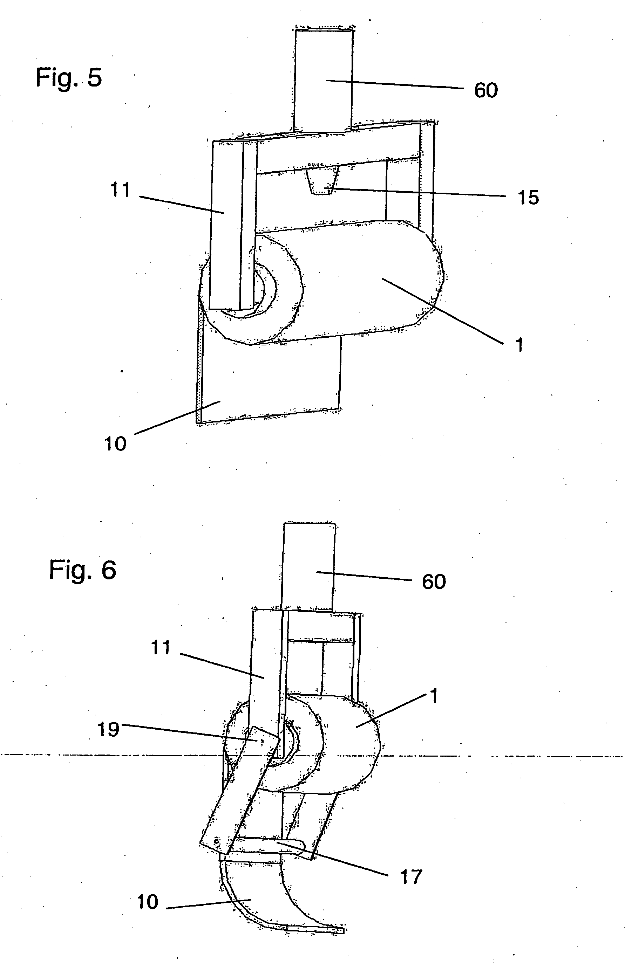

Eine Möglichkeit zur Gewährleistung einer gleichmäßigen Ablage ist es, kontinuierlich den Durchmesser der Rolle 1 zu bestimmen. Wie in Fig. 5 dargestellt, wird mittels optischem Sensor 15 berührungslos der Durchmesser der Rolle 1 ermittelt. Unter Verwendung der bekannten Dicke der Textilfaserbahn 10 und der linearen Geschwindigkeit des Tuchabrollers 11 bzw. des Ablagetisches 40 kann die für eine gleichmäßige Ablage notwendige Drehzahl des Motors, der die Rolle 1 antreibt, errechnet werden.

Eine weitere Möglichkeit zur automatischen Einstellung einer gleichmäßigen Ablage ist der Einsatz einer so genannten Tänzerrolle 17, wie in Fig. 6 dargestellt. Die Tänzerrolle ist eine schwenkbare Umlenkrolle, über die die Textilfaserbahn 10 beim Ablegevorgang 10 läuft. Die Auslenkung der Tänzerrolle 17 um die Achse 19 am Tuchabroller 11 ist abhängig von der Spannung in der Textilfaserbahn 10. Mit einem Potentiometer kann die Auslenkung in eine elektrische Spannung gewandelt werden. Die Drehzahl des Motors zum Antrieb der Rolle 1 reguliert sich in Abhängigkeit von der Auslenkung der Tänzerrolle 17. Hierbei wird eine bestimmte Grunddrehzahl vorgegeben.

Eine weitere, nicht in den Fig. dargestellte Möglichkeit zur automatischen Einstellung einer gleichmäßigen Ablage kann durch den Einsatz einer Lichtschranke erzielt werden. Diese bestimmt über einen Helligkeitsunterschied die relative Position desjenigen Abschnitts der Textilfaserbahn, welcher sich momentan zwischen Rolle und Ablagetisch befindet, zu einem Sollwert. Ein Regelkreis reguliert entsprechend die Drehzahl des Motors.

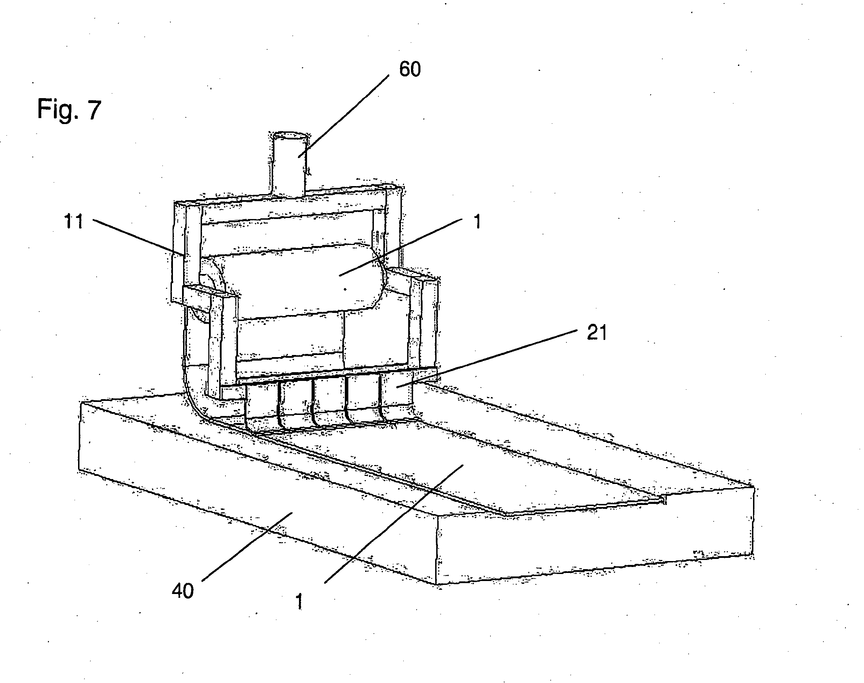

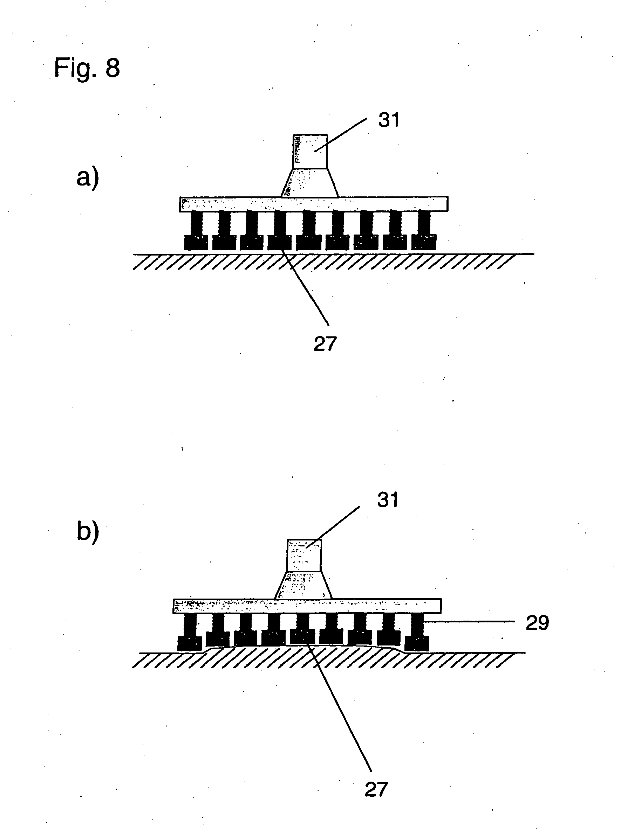

Bei dem erfindungsgemäßen Verfahren wird zeitgleich mit dem Ablegen auch ein Drapieren und Fixieren der angelegten Textilfaserbahn durchgeführt. Dies ist in den Fig. 7 und 8 in zwei verschiedenen Ausführungen (Fig. 8 in stark schematischer Darstellung) enthalten.

Gemäß Fig. 7 sind am Tuchabroller 11 mehrere flächenhafte Gleitelemente 21, z.B. Gleitbleche, angebracht, die sich bei der Bewegung des Tuchabrollers 11 während des Ablagevorgangs über das gerade abgelegte Textilfasermaterial bewegen. Die Gleitelemente 21 werden beheizt. Auf der Textilfaserbahn 10 ist ein Bindervlies aufgebracht, das zusammen mit der Textilfaserbahn 10 abgelegt wird. Durch die Wärmeeinbringung verklebt das Bindervlies die einzelnen, übereinander abgelegten Textilfaserbahnen miteinander. Darüber hinaus wird durch das Drücken auf die Textilfaserbahn diese kompaktiert und bei gekrümmten Oberflächen an diese angepasst. Die Breite eines Gleitblechs kann abhängig von der Komplexität der Oberflächenform des Bauteils variiert werden.

Gemäß der Ausführung nach Fig. 8 werden zum Drapieren beheizbare Rollen 27 eingesetzt. Abb. a) zeigt dabei den Einsatz der Rollen 27 bei einer im Wesentlichen ebenen Bauteilkontur.
Abb. b) zeigt den Einsatz bei einer gewölbten Bauteilkontur. Hierbei ist es notwendig, dass die Rollen flexibel gelagert sind, z.B. mittels Federelementen 29. Entsprechendes gilt für die Gleitelemente 21 nach Fig. 7. Bezugsziffer 31 bezeichnet den mechanischen Anschluss zum Tuchabroller 11. Zur Anpassung an die gekrümmte Bauteiloberfläche erfolgt durch den Drapiervorgang innerhalb der Faserstruktur eine Änderung der Faserwinkel.

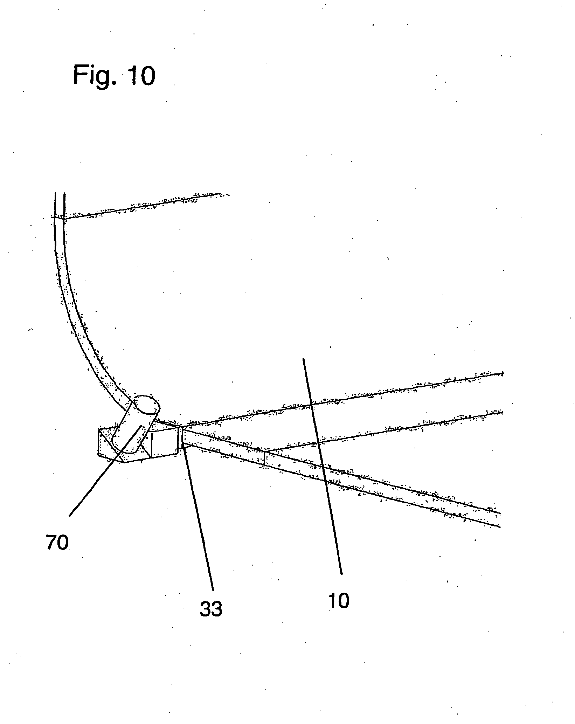

Das Abschneiden der Textilfaserbahn 10 erfolgt entlang der Bauteilkontur am Ende der abgelegten Bahn, wie in Fig. 10 dargestellt. Hierzu kann ein angetriebener Abschneider 33 zum Einsatz kommen. Die Schnittrichtung ist bevorzugt parallel zur Achse der Rolle 1. Der Abschneider 33 wird von einem separaten Roboter 70 getragen. Alternativ kann er auch am Tuchroller 11 angeordnet sein.

## Patentansprüche

1. Verfahren zur Ablage von Textilfaserbahnen (10) auf einer Bauteilform zur Herstellung faserverstärkter Kunststoffbauteile, wobei die Textilfaserbahn (10) in Form einer Rolle (1) vorliegt, wobei die Ablage vollautomatisch mittels Roboter (50,60) vorgenommen wird, und
- das Ende der abzulegenden Textilfaserbahn (10) mittels robotergetragenem Tuchgreifer (5) gegriffen und auf der Bauteilform platziert wird,
- die Textilfaserbahn (10) mittels robotergetragenem Tuchabroller (11) von der Rolle (1) abgerollt und auf der Bauteilform abgelegt wird,
- während der Ablage ein Drapieren der Textilfaserbahn (10) mittels einer Mehrzahl robotergetragener, flexibel gelagerter, beheizter Gleitbleche (21) oder robotergetragener beweglich gelagerter geheizter Rollen (27) vorgenommen wird, so dass durch Drücken auf die Textilfaserbahn (10) die Textilfaserbahn (10) an eine gekrümmte Oberfläche der Bauteilform angepasst wird,
- der Ablegevorgang im Hinblick auf eine konstante Ablegerate fortlaufend überwacht wird und die Ablegerate gegebenenfalls automatisch nachreguliert wird,
- die Ausrichtung der Textilfaserbahn (10) relativ zur Bauteilform fortlaufend mittels optischer Mittel (13) überwacht und gegebenenfalls nachreguliert wird,
- die Textilfaserbahnen (10) in Form großer trockener Textilfaserbahnen (10) mit einer Breite von mindestens 500 mm vorliegen, die auf ihrer Oberfläche ein Bindervlies aufweisen.

2. Verfahren nach Anspruch 1, **dadurch gekennzeichnet, dass** die Überwachung des Ablegevorgangs im Hinblick auf eine konstante Ablegerate derart durchgeführt wird, dass die abzulegende Textilfaserbahn (10) fortlaufend auf Zug überwacht wird.

3. Verfahren nach Anspruch 2, **dadurch gekennzeichnet, dass** die die fortlaufende Zugüberwachung der Textilfaserbahn (10) mittels Tänzerrolle (17) vorgenommen wird.

4. Verfahren nach Anspruch 1, **dadurch gekennzeichnet, dass** eine konstante Ablegerate derart sichergestellt wird, dass fortlaufend der Durchmesser der Rolle (1) gemessen wird.

5. Verfahren nach Anspruch 1, **dadurch gekennzeichnet, dass** die Überwachung des Ablegevorgangs im Hinblick auf eine konstante Ablegerate derart durchgeführt wird, dass mittels Lichtschranke die Position des momentan von der Rolle (1) abgerollten Abschnitts der Textilfaserbahn (10) relativ zu einem Sollwert gemessen wird.

6. Verfahren nach einem der vorangehenden Ansprüche, **dadurch gekennzeichnet, dass** die abgelegte Textilfaserbahn (10) bei Erreichen der Ablageendposition mittels robotergetragenem Abschneider (33) von der Rolle (1) getrennt wird.

7. Verfahren nach einem der vorangehenden Ansprüche, **dadurch gekennzeichnet, dass** die fortlaufende Ausrichtung der Textilfaserbahn (10) derart durchgeführt wird, dass auf der Bauteilform eine optische Soll-Bandkante (12) projiziert wird, die von einem Rollen-seitigen optischen Sensor (13) detektiert wird.

8. Verfahren nach einem der vorangehenden Ansprüche, **dadurch gekennzeichnet, dass** das Greifen des Endes der abzulegenden Textilfaserbahn (10) mittels Tuchgreifer (5) erfolgt, wobei die Fixierung der Textilfaserbahn (10) am Tuchgreifer (5) durch Expansion eines aufblasbaren elastischen Elements (6) erfolgt.

## Claims

1. Method for stacking textile fibre sheets (10) on a component mould for manufacturing fibre-reinforced plastic components, wherein the textile fibre sheet (10) is present in the form of a roll (1), wherein stacking is performed fully automatically by means of robots (50, 60), and
- the end of the textile fibre sheet (10) to be stacked is acquired and placed on the component mould by means of robotically supported cloth grippers (5),
- the textile fibre sheet (10) is unrolled from the roll (1) and stacked on the component mould by means of robotically supported cloth unwinders (11),
- during stacking, draping of the textile fibre sheet (10) is performed by a plurality of robotically supported, flexibly mounted, heated guide plates (21) or robotically supported, movably mounted, heated rollers (27), such that by pressing on the textile fibre sheet (10) the textile fibre sheet (10) is adapted to a curved surface of the component mould,
- with a view to a constant stacking rate, the stacking operation is continuously monitored and the stacking rate, if and when applicable, is automatically readjusted,
- the alignment of the textile fibre sheet (10) in relation to the component mould is continuously monitored and, if and when applicable, readjusted by means of optical means (13),
- the textile fibre sheets (10) are present in the form of large dried textile fibre sheets (10) which have a width of at least 500 mm and which on their surface display a non-woven binder.

2. Method according to Claim 1, **characterized in that** the monitoring of the stacking operation with a view to a constant stacking rate is carried out in such a manner that the textile fibre sheet (10) to be stacked is continuously monitored for traction.

3. Method according to Claim 2, **characterized in that** the continuous traction monitoring of the textile fibre sheet (10) is performed by means of a dancer roll (17).

4. Method according to Claim 1, **characterized in that** a constant stacking rate is ensured **in that** the diameter of the roll (1) is continuously measured.

5. Method according to Claim 1, **characterized in that** the monitoring of the stacking operation with a view to a constant stacking rate is carried out in such a manner that the position of the portion of the textile fibre sheet (10) which is momentarily being unrolled from the roll (1) is measured in relation to a nominal value by means of a light barrier.

6. Method according to one of the preceding claims, **characterized in that** the stacked textile fibre sheet (10), when reaching the final stacking position, is severed from the roll (1) by means of a robotically supported cutter (33).

7. Method according to one of the preceding claims, **characterized in that** the continuous alignment of the textile fibre sheet (10) is carried out in such a manner that an optical nominal tape edge (12), which is detected by an optical sensor (13) on the roll side, is projected onto the component mould.

8. Method according to one of the preceding claims, **characterized in that** acquiring the end of the textile fibre sheet (10) to be stacked takes place by means of cloth grippers (5), wherein fixing of the textile fibre sheet (10) to cloth gripper (5) takes place by expanding an inflatable elastic element (6).

## Revendications

1. Procédé destiné à déposer des bandes de fibres textiles (10) sur un moule de composant pour la fabrication de composants en plastique renforcés par des fibres, la bande de fibres textiles (10) se présentant sous la forme d'un rouleau (1), la dépose étant effectuée complètement automatiquement au moyen de robots (50, 60), et
- l'extrémité de la bande de fibres textiles (10) à déposer étant saisie au moyen d'un dispositif de préhension de toile (5) portés par un robot et étant placée sur le moule de composant,
- la bande de fibres textiles (10) étant déroulée du rouleau (1) au moyen d'un dispositif de déroulement de toile (11) portés par un robot et étant déposée sur le moule de composant,
- pendant la dépose, un drapage de la bande de fibres textiles (10) au moyen d'une pluralité de tôles de glissement chauffées (21), supportées de manière flexible, portées par un robot, ou de rouleaux chauffés (27) supportés de manière déplaçable et portés par un robot étant effectué de telle sorte que par pression sur la bande de fibres textiles (10), la bande de fibres textiles (10) soit adaptée à une surface courbe du moule de composant,
- l'opération de dépose étant contrôlée en continu en termes de vitesse de dépose constante et la vitesse de dépose étant corrigée automatiquement le cas échéant,
- l'orientation de la bande de fibres textiles (10) par rapport au moule de composant étant contrôlée en continu au moyen de moyens optiques (13) et étant corrigée le cas échéant,
- les bandes de fibres textiles (10) se présentant sous la forme de grandes bandes de fibres textiles sèches (10) ayant une largeur d'au moins 500 mm qui présentent sur leur surface un non-tissé liant.

2. Procédé selon la revendication 1, **caractérisé en ce que** le contrôle de l'opération de dépose en termes d'une vitesse de dépose constante est effectué de telle sorte que la bande de fibres textiles à déposer (10) soit contrôlée en continu en termes de traction.

3. Procédé selon la revendication 2, **caractérisé en ce que** le contrôle de traction continu de la bande de fibres textiles (10) est effectué au moyen d'un rouleau danseur (17).

4. Procédé selon la revendication 1, **caractérisé en ce qu'**une vitesse de dépose constante est garantie de telle sorte que le diamètre du rouleau (1) soit mesuré en continu.

5. Procédé selon la revendication 1, **caractérisé en ce que** le contrôle de l'opération de dépose en termes d'une vitesse de dépose constante est effectué de telle sorte que la position de la portion de bande de fibres textiles (10) déroulée momentanément du rouleau (1) soit mesurée par rapport à une valeur de consigne au moyen d'une barrière lumineuse.

6. Procédé selon l'une quelconque des revendications précédentes, **caractérisé en ce que** la bande de fibres textiles déposée (10), une fois la position finale de dépose atteinte, est séparée du rouleau (1) au moyen d'un dispositif de découpe (33) portés par un robot.

7. Procédé selon l'une quelconque des revendications précédentes, **caractérisé en ce que** l'orientation continue de la bande de fibres textiles (10) est effectuée de telle sorte qu'un bord de bande de consigne optique (12) soit projeté sur le moule de composant, lequel est détecté par un capteur optique (13) du côté du rouleau.

8. Procédé selon l'une quelconque des revendications précédentes, **caractérisé en ce que** la préhension de l'extrémité de la bande de fibres textiles à déposer (10) s'effectue au moyen d'un dispositif de préhension de toile (5), la fixation de la bande de fibres textiles (10) au dispositif de préhension de toile (5) s'effectuant par l'expansion d'un élément élastique gonflable (6).
